# EUROPEAN PATENT SPECIFICATION

(11) **EP 1 442 900 B1**
(45) Date of publication and mention of the grant of the patent: **19.12.2007**
(21) Application number: 04100199.1
(22) Date of filing: 22.01.2004
(51) Int. Cl.: B60C 9/00, C08J 5/06, D06M 13/152, D06M 15/53

(54) **Agricultural or industrial tire with polyester cord**
Landwirtschaft- oder Nutzfahrzeugreifen mit Polyesterkord
Pneumatique agraire ou pour véhicule industriel avec câble polyester

(30) Priority: 30.01.2003 US 443634 P
(43) Date of publication of application: 04.08.2004
(73) Proprietor: THE GOODYEAR TIRE & RUBBER COMPANY, Akron, OH 44316-0001 (US)
(72) Inventor: Reuter, René François, L-9142, Burden (LU); Imhoff, Serge Julien Auguste, L-9184, Schrondweiler (LU); Goksoy, Mustafa, L-9357, Bettendorf (LU); Schmitz, Frank, L-7780, Bissen (LU)
(74) Representative: Kutsch, Bernd

(56) References cited:
- US-A- 3 234 067
- US-A- 3 307 966
- US-A- 3 387 996
- US-A- 5 352 483

## Description

### Technical Field

The present invention is directed to an agricultural or industrial pneumatic tire having polyester reinforcing cords treated with a polyepoxide. More particularly, the present invention is directed to an agricultural or industrial tire having polyester cords treated with a polyepoxide, wherein the polyepoxide is applied to the cords after twist of the polyester yarn to form the cord. The cord may subsequently be treated in a second step with an RFL.

### Background

Agricultural and industrial tires characteristically feature large, thick tread lugs. Cure of these tires requires long, high temperature cycles to ensure complete cure of the thickest rubber components. While the high temperature, long duration cures are necessary to cure the thicker components, the extreme conditions may have deleterious effects on other, thinner components of the tire. Such is the case with the tire carcass, the belts and other inserts of textile cords where the high cure temperatures may interfere with the development of good adhesion between the cord and the rubber coat. In particular, adhesion between polyester cords and rubber in agricultural or industrial tires is often poor at best. Adhesive systems to date used in agricultural or industrial tires to promote adhesion between the cords and rubber have not provided a sufficient degree of adhesion.

It would be desirable, therefore, to have an agricultural or industrial tire that has polyester reinforcement treated in such a way as to exhibit good adhesion to rubber even after cure at high temperature and long time.

US-A- 3,387,996 or US-A- 3,307,966 discloses a polyester yarn which is prepared by first obtaining a cord through twisting together a plurality of polyester yarns; secondly treating the cord with an aqueous emulsion comprising a polyepoxide; and thirdly treating the cord with an aqueous RFL emulsion comprising a resorcinol-formaldehyde resin, a styrene-butadiene copolymer latex, a vinylpyridine-styrene-butadiene terpolymer latex, and a blocked isocyanate.

US-A- 5,352,483 discloses melt-spun spin-drawn polyester filaments whereby an ortho-crescol formaldehyde novolac resin derived polyepoxide is used.

### Summary

The present invention is directed to a pneumatic agricultural or industrial tire according to claim 1.

Dependant claims comprise preferred embodiments of the invention.

### Brief Description of the Drawings

The following is a brief description of the drawings in which like parts bear like reference numerals and in which:
Figure 1 is a cross-sectional view of the tire.

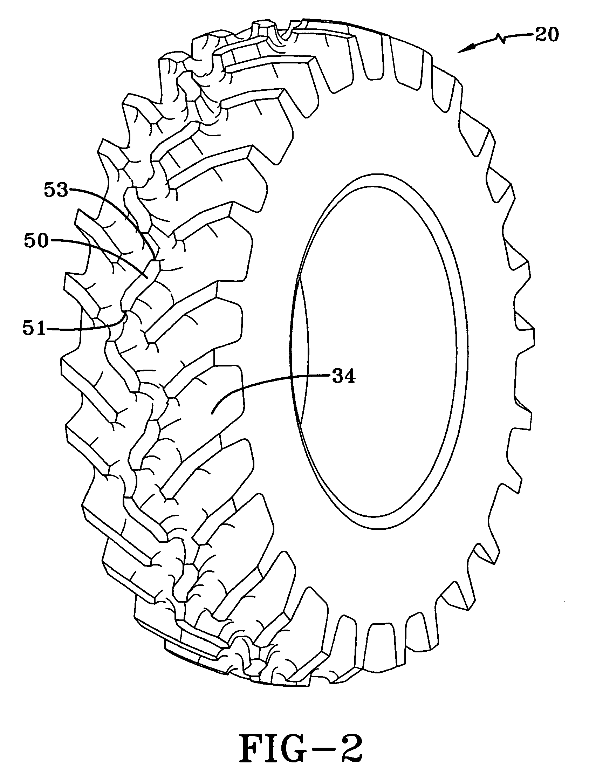

Figure 2 is a perspective view of a tire according to the invention.
Figure 3 is a plan view of a portion of the contact patch of a tire.

### Description

Conventionally, the carcass ply component of a tire is a cord reinforced element of the tire carcass. Often two or more carcass ply components are used in a tire carcass. The carcass ply component itself is conventionally a multiple cord-reinforced component where the cords are embedded in a rubber composition which is usually referred to as a ply coat. The ply coat rubber composition is conventionally applied by calendering the rubber onto the multiplicity of cords as they pass over, around and through relatively large, heated, rotating, metal cylindrical rolls. Such carcass ply component of a tire, as well as the calendering method of applying the rubber composition ply coat, are well known to those having skill in such art. The same applies for the tire belt layers, also formed of textile cords and treated the same way as the carcass layers. Other components in the tire casing that may include a polyester cord include bead inserts.

In practice, cords of various compositions may be used for the carcass ply or belts such as, for example, but not intended to be limiting polyester, rayon, aramid and nylon. Such cords and their construction, whether monofilament or as twisted filaments, are well known to those having skill in such art. In particular, polyester cords are desirable for use in agricultural or industrial tires because of their good properties and relatively low cost. However, as has been discussed herein, adhesion between the ply coat and polyester cord in agricultural or industrial tires has heretofore been less than adequate.

It has now been found that treatment of polyester cord with a treatment subsequent to twisting of the polyester yarns into cord provides for improved adhesion between the polyester and ply coat in a cured agricultural or industrial tire.

The treatment of the polyester cord comprises treating the cord after twist of the yarn with an aqueous emulsion comprising a polyepoxide, followed by treating the cord with an aqueous RFL emulsion comprising a resorcinol-formaldehyde resin, a styrene-butadiene copolymer latex, a vinylpyridine-styrene-butadiene terpolymer latex, and a blocked isocyanate.

The polyester cord used in the ply and belt may be made from any polyester fiber suitable for use in a tire as is known in the art. Polyester cords yarns are typically produced as multifilament bundles by extrusion of the filaments from a polymer melt. Polyester cord is produced by drawing polyester fiber into yarns comprising a plurality of the fibers, followed by twisting a plurality of these yarns into a cord. Such yarns may be treated with a spin-finish to protect the filaments from fretting against each other and against machine equipment to ensure good mechanical properties. In some cases the yarn may be top-coated with a so-called adhesion activator prior to twisting the yam into cord. The polyester may also be treated with an RFL (Resorcinol-Formaldehyde-Latex ) dip after twisting the yarn into cord. The adhesion activator, typically comprising a polyepoxide, serves to improve adhesion of the polyester cord to rubber compounds after it is dipped with an RFL dip. Such dip systems are not robust against long and high temperature cures in compounds that contain traces of humidity and amines which attack the cord filament skin and degrade the adhesive / cord interface. The typical sign of failure is a nude polyester cord showing only traces of adhesive left on it.

In contrast to the prior art technique, in the present invention the polyester is treated with polyepoxide after the polyester yarns are twisted into cords. The twisted cords are dipped in an aqueous dispersion of a polyepoxide, also referred to herein as an epoxy or epoxy compound. The polyester cord may be formed from yarns that have been treated with sizing or adhesives prior to twist. Thus, cords made using conventional adhesive activated yarns, i.e., yarns treated with adhesive prior to twist, may be subsequently treated using the current methods.

As a polyepoxide, use may be made of reaction products between an aliphatic polyalcohol such as glycerine, propylene glycol, ethylene glycol, hexane triol, sorbitol, trimethylol propane, 3-methylpentanetriol, poly(ethylene glycol), poly(propylene glycol) etc. and a halohydrine such as epichlorohydrin, reaction products between an aromatic polyalcohol such as resorcinol, phenol, hydroquinoline, phloroglucinol bis(4-hydroxyphenyl)methane and a halohydrin, reaction products between a novolac type phenolic resin such as a novolac type phenolic resin, or a novolac type resorcinol resin and halohydrin. In one embodiment, the polyepoxide is derived from an ortho-cresol formaldehyde novolac resin.

The polyepoxide is used as an aqueous dispersion of a fine particle polyepoxide. In one embodiment, the polyepoxide is present in the aqueous dispersion in a concentration range of from 1 to 5 percent by weight. In another embodiment, the polyepoxide is present in the aqueous dispersion in a concentration range of from 1 to 3 percent by weight.

In a first treatment step, dry polyester cord is dipped in the aqueous polyepoxide dispersion. The cord is dipped for a time sufficient to allow a dip pick up, or DPU, of between 0.3 and 0.7 percent by weight of polyepoxide. In another embodiment, the DPU is between 0.4 and 0.6 percent by weight. The DPU is defined as the dipped cord weight (after drying or curing of the dipped cord) minus the undipped cord weight, then divided by the undipped cord weight.

The polyester cord may be treated in the aqueous polyepoxide dispersion in a continuous process by drawing the cord through a dispersion bath, or by soaking the cord in batch. After dipping in the polyepoxide dispersion, the cord is dried or cured to remove the excess water, using methods as are known in the art.

In a second treatment step, the polyepoxide treated polyester cord is dipped in a modified RFL liquid. The adhesive composition is comprised of (1) resorcinol, (2) formaldehyde and (3) a styrene-butadiene rubber latex, (4) a vinylpyridine-styrene-butadiene terpolymer latex, and (5) a blocked isocyanate. The resorcinol reacts with formaldehyde to produce a resorcinol-formaldehyde reaction product. This reaction product is the result of a condensation reaction between a phenol group on the resorcinol and the aldehyde group on the formaldehyde. Resorcinol resoles and resorcinol-phenol resoles, whether formed in situ within the latex or formed separately in aqueous solution, are considerably superior to other condensation products in the adhesive mixture.

The resorcinol may be dissolved in water to which around 37 percent formaldehyde has been added together with a strong base such as sodium hydroxide. The strong base should generally constitute around 7.5 percent or less of the resorcinol, and the molar ratio of the formaldehyde to resorcinol should be in a range of from 1.5 to 2. The aqueous solution of the resole or condensation product or resin is mixed with the styrene-butadiene latex and vinylpyridine-styrene-butadiene terpolymer latex. The resole or other mentioned condensation product or materials that form said condensation product should constitute from 5 to 40 parts and preferably 10 to 28 parts by solids of the latex mixture. The condensation product forming the resole or resole type resin forming materials should preferably be partially reacted or reacted so as to be only partially soluble in water. Sufficient water is then preferably added to give 12 percent to 18 percent by weight overall solids in the final dip. The weight ratio of the polymeric solids from the latex to the resorcinol/formaldehyde resin should be in a range of 2 to 6.

The RFL adhesive also includes a blocked isocyanate. In one embodiment from 1 to 8 parts by weight of solids of blocked isocyanate is added to the adhesive. The blocked isocyanate may be any suitable blocked isocyanate known to be used in RFL adhesive dips, including but not limited to caprolactam blocked methylene-bis-(4-phenylisocyanate), such as Grilbond-IL6 available from EMS American Grilon, Inc., and phenol formaldehyde blocked isocyanates as disclosed in US-A- 3,226,276, 3,268,467; and 3,298,984. As a blocked isocyanate, use may be made of reaction products between one or more isocyanates and one or more kinds of isocyanate blocking agents. The isocyanates include monoisocyanates such as phenyl isocyanate, dichlorophenyl isocyanate and naphthalene monoisocyanate, diisocyanate such as tolylene diisocyanate, dianisidine diisocyanate, hexamethylene diisocyanate, m-phenylene diisocyanate, tetramethylene diisocyante, alkylbenzene diisocyanate, m-xylene diisocyanate, cyclohexylmethane diisocyanate, 3,3-dimethoxyphenylmethane-4,4'-diisocyanate, 1-alkoxybenzene-2,4-diisocyanate, ethylene diisocyanate, propylene diisocyanate, cyclohexylene-1,2-diisocyanate, diphenylene diisocyanate, butylene-1,2-diisocyanate, diphenylmethane-4,4diisocyanate, diphenylethane diisocyanate, 1,5-naphthalene diisocyanate, etc., and triisocyanates such as triphenylmethane triisocyanate, diphenylmethane triisocyanate, etc. The isocyanate-blocking agents include phenols such as phenol, cresol, and resorcinol, tertiary alcohols such as t-butanol and t-pentanol, aromatic amines such as diphenylamine, diphenylnaphthylamine and xylidine, ethyleneimines such as ethylene imine and propyleneimine, imides such as succinic acid imide, and phthalimide, lactams such as ε.-caprolactam, δ-valerolactam, and butyrolactam, ureas such as urea and diethylene urea, oximes such as acetoxime, cyclohexanoxime, benzophenon oxime, and α-pyrolidon.

The polymers may be added in the form of a latex or otherwise. In one embodiment, a vinylpyridine-styrene-butadiene terpolymer latex and styrene-butadiene rubber latex may be added to the RFL adhesive. The vinylpyridiene-styrene-butadiene terpolymer may be present in the RFL adhesive such that the solids weight of the vinylpyridiene-styrene-butadiene terpolymer is from 50 percent to 100 percent of the solids weight of the styrene-butadiene rubber; in other words, the weight ratio of vinylpyridiene-styrene-butadiene terpolymer to styrene-butadiene rubber is from 1 to 2.

It is normally preferable to first prepare the polymer latex and then add the partially condensed condensation product. However, the ingredients (the resorcinol and formaldehyde) can be added to the polymer latex in the uncondensed form and the entire condensation can then take place in situ. The latex tends to keep longer and be more stable if it is kept at an alkaline pH level.

In accordance with this invention, the polyepoxide treated cord is dipped for one to three seconds in the RFL dip and dried at a temperature within the range of 120°C to 265°C for 0.5 minutes to 4 minutes and thereafter calendered into the rubber and cured therewith. The drying step utilized will preferably be carried out by passing the cord through 2 or more drying ovens which are maintained at progressively higher temperatures. For instance, it is highly preferred to dry the cord by passing it through a first drying oven which is maintained at a temperature of 250°F (121°C) to 300°F (149°C) and then to pass it through a second oven which is maintained at a temperature which is within the range of 350°F (177°C) to 500°F (260°C). It should be appreciated that these temperatures are oven temperatures rather than the temperature of the cord being dried. The cord will preferably have a total residence time in the drying ovens which is within the range of 1 minute to 5 minutes. For example, a residence time of 30 seconds to 90 seconds in the first oven and 30 seconds to 90 seconds in the second oven could be employed.

After treatment of the polyester cord in the polyepoxide and RFL, the treated cord is incorporated into a ply layer with a rubber ply coat compound.

It is recognized that conventional compounding ingredients may be used in the preparation of the ply coat rubber composition. The ply coat, in the finished tire is sulfur cured as a component of the tire. For example, the sulfur cured ply coat rubber composition may contain conventional additives including reinforcing agents, fillers, peptizing agents, pigments, stearic acid, accelerators, sulfur vulcanizing agents, antiozonants, antioxidants, processing oils, activators, initiators, plasticizers, waxes, pre-vulcanization inhibitors, extender oils and the like. Representative of conventional accelerators may be, for example, amines, guanidines, thioureas, thiols, thiurams, sulfenamides, dithiocarbamates and xanthates which are typically added in amounts of from 0.2 to 3 phr. Representative of sulfur vulcanizing agents include element sulfur (free sulfur) or sulfur donating vulcanizing agents, for example, an amine disulfide, polymeric polysulfide or sulfur olefin adducts. The amount of sulfur vulcanizing agent will vary depending on the type of rubber and particular type of sulfur vulcanizing agent but generally range from 0.1 phr to 3 phr with a range of from 0.5 phr to 2 phr being preferred. Representative of the antidegradants which may be in the rubber composition include monophenols, bisphenols, thiobisphenols, polyphenols, hydroquinone derivatives, phosphites, phosphate blends, thioesters, naphthylamines, diphenol amines as well as other diaryl amine derivatives, para-phenylene diamines, quinolines and blended amines. Antidegradants are generally used in an amount ranging from 0.1 phr to 10 phr with a range of from 2 to 6 phr being preferred. Amine based antidegradants, however, are not preferred in the practice of this invention. Representative of a peptizing agent that may be used is pentachlorophenol which may be used in an amount ranging from 0.1 phr to 0.4 phr with a range of from 0.2 to 0.3 phr being preferred. Representative of processing oils which may be used in the rubber composition of the present invention include, for example aliphatic, naphthenic and aromatic oils. The processing oils may be used in a conventional amount ranging from 0 to 30 phr with a range of from 5 to 15 phr being more usually preferred. Initiators are generally used in a conventional amount ranging from 1 to 4 phr with a range of from 2 to 3 phr being preferred.

Accelerators may be used in a conventional amount. In cases where only a primary accelerator is used, the amounts range from 0.5 to 2 phr. In cases where combinations of two or more accelerators are used, the primary accelerator is generally used in amounts ranging from 0.5 to 1.5 phr and a secondary accelerator is used in amounts ranging from 0.1 to 0.5 phr. Combinations of accelerators have been known to produce a synergistic effect. Suitable types of conventional accelerators are amines, disulfides, guanidines, thioureas, thiazoles, thiurams, sulfenamides, dithiocarbamates and xanthates. Preferably, the primary accelerator is a sulfenamide. If a secondary accelerator is used, it is preferably a guanidine, dithiocarbamate or thiuram compound.

Pneumatic tires are conventionally comprised of a generally toroidal shaped casing with an outer circumferential tread adapted to the ground contacting space beads and sidewalls extending radially from and connecting said tread to said beads. The tread may be built, shaped, molded and cured by various methods which will be readily apparent to those skilled in the art.

In the case of a agricultural or industrial tire, the typical cure cycle for curing a green tire utilizes high temperatures and longer cure times than is typical for smaller, passenger type tires. The longer cure times and higher temperatures of cure are sufficient to cure the thick, heavy rubber components of the agricultural or industrial tire. These components include the tread lugs which typically cure more slowly that the thinner parts of the tire. The tread lugs may have a width and length in a range of from 0.8 to 2.75 inches, and a height in a range of from 1 to 4 inches. The tread may further have a net-to-gross ratio in a range of from 15 to 40 percent as measured around the entire 360° circumference of a normally inflated and normally loaded tire contacting a flat hard surface, as described further hereinafter. Alternatively, the net-to-gross ratio may be in a range of from 15 to 30 percent. Thus, the cure cycle of high temperature and long time would be understood by one skilled in the art as characteristic of cure in an agricultural or industrial tire having thick, heavy tread lugs.

In one embodiment, the agricultural or industrial tire may be cured at a temperature ranging from 160°C to 190°C, preferably from 160°C to 180°C. The agricultural tire may be cured for a time ranging from 40 minutes to 150 minutes, preferably from 60 minutes to 120 minutes. Generally, the cure time and temperature is sufficient to cure the characteristically thick, heavy tread of the agricultural or industrial tire. The agricultural or industrial tire having thick, heavy tread is characteristically cured using the long times and high temperatures.

The invention may be better understood by reference to the accompanying Figures, for which the following definitions are applicable:
"Aspect Ratio" means the ratio of its section height to its section width.
"Belt Structure" or "Reinforcing Belts" means at least two annular layers or plies of parallel cords, woven or unwoven, underlying the tread, unanchored to the bead, and having both left and right cord angles preferably in the range from 17° to 27° with respect to the equatorial plane of the tire.
"Bias Ply Tire" means that the reinforcing cords in the carcass ply extend diagonally across the tire from bead-to-bead at a 25-65° angle with respect to the equatorial plane of the tire, the ply cords running at opposite angles in alternate layers.
"Carcass" means a laminate of tire ply material and other tire components cut to length suitable for splicing, or already spliced, into a cylindrical or toroidal shape. Additional components may be added to the carcass prior to its being vulcanized to create the molded tire.
"Casing" means the tire body exclusive of the tread.
"Design Rim Width" is the specific commercially available rim width assigned to each tire size and typically is between 75% and 90% of the specific tire's section width.
"Equatorial Plane (EP)" means the plane perpendicular to the tire's axis of rotation and passing through the center of its tread.
"Footprint" means the contact patch or area of contact of the tire tread with a flat surface at zero speed and under normal load and pressure.
"Lateral Edge" means the axially outermost edge of the tread as defined by a plane parallel to the equatorial plane and intersecting the outer ends of the axially outermost traction lugs at the radial height of the inner tread surface.
"Leading" refers to a portion or part of the tread that contacts the ground first, with respect to a series of such parts or portions, during rotation of the tire in the direction of travel.
"Net-to-gross Ratio" means the ratio of the surface are of the normally loaded and normally inflated tire tread rubber that makes contact with a hard flat surface, divided by the total area of the tread, including non-contacting portions such as grooves as measured around the entire circumference of the tire.
"Radial Ply Tire" means a belted or circumferentially-restricted pneumatic tire in which the ply cords which extend from bead to bead are laid at cord angles between 65° and 90° with respect to the equatorial plane of the tire.
"Section Height" (SH) means the radial distance from the nominal rim diameter to the outer diameter of the tire at its equatorial plane.
"Section Width" (SW) means the maximum linear distance parallel to the axis of the tire and between the exterior of its sidewalls when and after it has been inflated at normal pressure for 24 hours, but unloaded, excluding elevations of the sidewalls due to labeling, decoration or protective bands.
"Tire Design Load" is the base or reference load assigned to a tire at a specific inflation pressure and service condition; other load-pressure relationships applicable to the tire are based upon that base or reference.
"Trailing" refers to a portion or part of the tread that contacts the ground last, with respect to a series of such parts or portions during rotation of the tire in the direction of travel.
"Tread Arc Width" (TAW) means the width of an arc having its center located on the plane (EP) and which substantially coincides with the radially outermost surfaces of the various traction elements (lugs, blocks, buttons, ribs, etc.) across the lateral or axial width of the tread portions of a tire when the tire is mounted upon its designated rim and inflated to its specified inflation pressure but not subject to any load.
"Tread Width" means the arc length of the tread surface in the axial direction, that is, in a plane parallel to the axis of rotation of the tire.
"Unit Tread Pressure" means the radial load borne per unit area (square centimeter or square inch) of the tread surface when that area is in the footprint of the normally inflated and normally loaded tire.

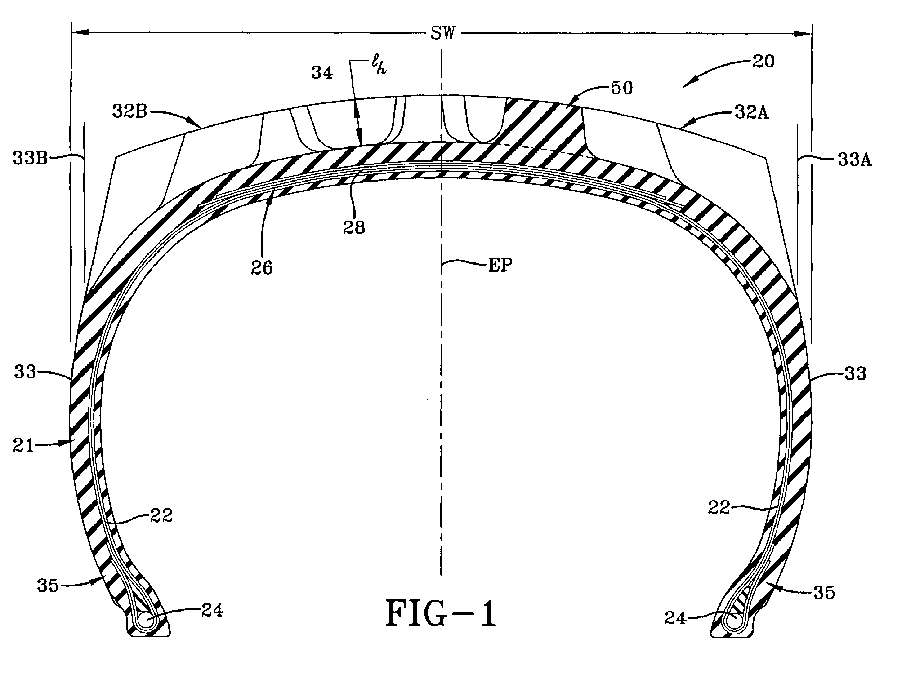

Now referring to Fig. 1, a tire is shown in cross-section view generally as reference numeral 20. The pneumatic tire has a carcass 21 having one or more carcass plies 22 extending circumferentially about the axis of rotation of the tire 20. The carcass plies are anchored around a pair of substantially inextensible annular beads 24. A belt reinforcing member 26 comprising one or more belt plies 28 are disposed radially outwardly from the carcass plies. The belt plies provide reinforcement for the crown region of the tire. A circumferentially extending tread 32A, 32B is located radially outwardly of the belt reinforcing structure 26.

A sidewall portion 33 extends radially inwardly from each axial or lateral tread edge 33A, 33B of the tread to an annular bead portion 35 having the beads 24 located therein.

The carcass plies 22 preferably have textile or synthetic cords reinforcing the plies. The cords are preferably oriented radially, but bias ply type tires are also envisioned. Typically, the tire may have two, three or four plies, each construction increasing in load carry capability as a function of the number of plies.

The belt reinforcement member 26 preferably includes at least two belts reinforced by synthetic cords of polyester, nylon, rayon or aramid.

In summary the tire 20 according to the present invention has a tread 32, the tread 32 has a first tread edge 33A and a second tread edge 33B, and disposed between the tread edges 33A, 33B is an inner tread 34 and a plurality of lugs 50 extending radially outwardly from the inner tread 34.

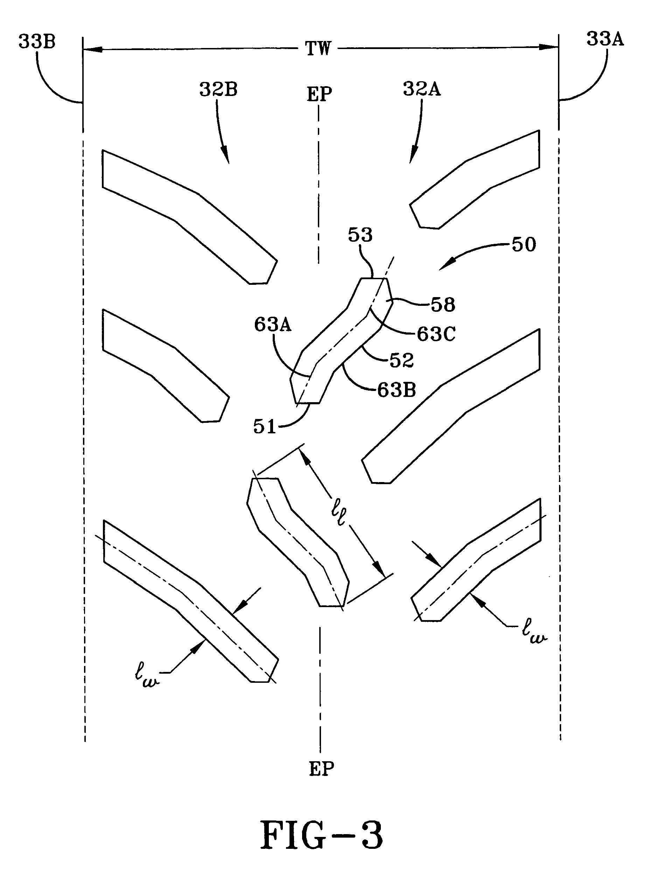

As illustrated in Fig. 3, each lug 50 has a radially outer surface 58, a leading first edge 52, a trailing second edge 54 and a centerline 63 between the first and second edges. Each central lug 50 extends generally circumferentially from a leading end 51 to a trailing end 53. Other lug configurations are possible and are determined by the design of the tire depending on the particular tire service environment.

The average distance along the centerlines 63 between the leading and trailing ends 51,53 defines total the length (I_{I}) of the lug 50.

The distance extending substantially perpendicularly between the first and second edges 52, 54 of the central lug define the lug width (I_{w}). The radial distance extending between the inner tread 34 and the edges 52,54 of the lug 50 defines the radial lug height (Iₕ).

As shown in Fig. 3 the net-to-gross ratio of the tread is less than 25%. More generally, the net-to-gross ratio may be within the range for agricultural tires as previously discussed herein. The space between the lugs creates large soil discharge channels 36.

It is understood that one can vary the overall shape of the lugs and can modify the general orientation, number, or appearance of the lugs without departing from the spirit of the claimed invention.

The invention is further illustrated by the following non-limiting examples.

### Example I

Adhesive activated polyester yarns were first twisted to form a polyester cords. The cords were then treated with an aqueous dispersion of a 2 percent by weight of fine particle ortho-cresol formaldehyde novolac polyepoxide resin by dipping the cord for 5 seconds, followed by drying for 60 seconds at 140°C. The cords were then treated with an RFL dip containing 30 percent by weight of SBR, 30 percent by weight of vinylpyridene-styrene-butadiene, and 6.5 percent by weight of a blocked isocyanate, by dipping the cord for 5 seconds, following by drying for 60 seconds at 140°C and finally for 60 seconds at 245°C.

Prior to RFL treatment, polyester cords treated were tested for polyepoxide dip pick up (DPU) using gravimetric analysis and nuclear magnetic resonance (NMR). Results of these analyses showed a DPU of 0.525 percent by weight by gravimetric analysis and 0.52 percent by weight by NMR.

### Example II

Polyester cord treated using the methods of Example 1 were tested for adhesion to a two standard natural rubber ply coat compounds containing standard amounts of additives and curatives. Ply compound 1 included amine compounds aggressive to polyester, and ply compound 2 was a less aggressive composition. A first control (Control 1) polyester cord was made by using adhesive activated polyester yarn treated with an RFL containing a blocked isocyanate dip before twist. A second control (Control 2) polyester cord was made by using adhesive activated polyester yam treated with combined polyepoxide, blocked isocyanate and RFL before twist.

Adhesion test samples were prepared by a standard peel adhesion test on 1" wide specimens. Strip adhesion samples were made by plying up a layers of fabric with both sides coated with 0.30 mm rubber coat compound to make a rubberized fabric, followed by preparation of a sandwich of two layers of the rubberized fabric separated by a mylar window sheet. The sandwich was cured and 1" samples cut centered on each window in the mylar. The cured samples were then tested for adhesion between the rubberized fabrics in the area defined by the mylar window by 180 degree pull on a test apparatus. Percent rubber coverage on cord was determined by visual comparison. Parallel samples were cured using the following cure cycles: 32 minutes at 150°C (characteristic of passenger tires and sport utility vehicle tires), 137 minutes at 160°C (long cure cycle for agricultural and industrial tires), and 44 minutes at 180°C (shorter cure cycle for agricultural and industrial tires). Results of the adhesion tests are shown in Tables 1 and 2.

**Table 1**

| Ply Compound 1 | | | |
|---|---|---|---|
| Cure, minutes/°C | 32/150 | 137/160 | 44/180 |
| Adhesion, N/inch | | | |
| Control 1 | 188 | 102 | 92 |
| Example 1 | 245 | 203 | 185 |
| Control 2 | 246 | 137 | 133 |

| Rubber Coverage on Cord, % | | | |
|---|---|---|---|
| Control 1 | 30 | 10 | 10 |
| Example 1 | 60 | 70 | 50 |
| Control 2 | 80 | 40 | 40 |

**Table 2**

| Ply Compound 2 | | | |
|---|---|---|---|
| Cure, minutes /°C | 32/150 | 137/160 | 44/180 |
| Adhesion, N/inch | | | |
| Control 1 | 323 | 120 | 74 |
| Example 1 | 486 | 282 | 240 |
| Control 2 | 375 | 189 | 151 |

| Rubber Coverage on Cord, % | | | |
|---|---|---|---|
| Control 1 | 75 | 5 | 5 |
| Example 1 | 80 | 45 | 40 |
| Control 2 | 75 | 30 | 20 |

As is evident from the data in Tables 1 and 2, polyester cord treated following the procedure disclosed herein surprisingly and unexpectedly shows superior adhesion to rubber ply coat compounds as compared with the controls. In particular, the improved adhesion is observed in samples having been cured at high temperature and long cure times, as is experienced in agricultural tires.

### Example III

Agricultural tires were built using ply cord treated following methods similar to those of Example I. The tires are tested for various indications, including Outdoor Resiliometer (ODR) and adhesion. Results indicate that the tires perform equally or superior to tires built with conventional techniques.

## Claims

1. A pneumatic agricultural or industrial tire comprising a casing having at least one component reinforced with polyester cord, and a rubber tread disposed radially outwardly of the casing, the tread having an inner tread (34) and a plurality of tread lugs (50) projecting radially from the inner tread (34), wherein the polyester cord comprises a plurality of polyester yarns being twisted together, wherein said polyester yarns comprise a polyepoxide disposed on the surface of the untwisted yarns; wherein the polyester cord comprises a polyepoxide disposed on the surface of the cord comprising the twisted yarns; and wherein an RFL emulsion comprising a resorcinol-formaldehyde resin, a styrene-butadiene copolymer latex, a vinylpyridine-styrene-butadiene terpolymer latex, and a blocked isocyanate is disposed over said polyepoxide disposed on the surface of the cord comprising the twisted yarns.

2. The pneumatic agricultural or industrial tire of claim 1, wherein each lug (50) has a width and length in a range of from 2.032 cm to 6.985 cm (0.8 to 2.75 inches), and a height in a range of from 2.54 cm to 10.16 cm (1 to 4 inches), and wherein the tread has a net-to-gross ratio in a range of from 15 to 40 percent, preferably 15 to 30 percent, as measured around the entire 360° circumference of a normally inflated and normally loaded tire (20) contacting a flat hard surface.

3. The pneumatic agricultural or industrial tire of claim 1 or 2 wherein said polyepoxide being disposed on the surface of the polyester cord comprising the twisted yarns is selected from the group consisting of reaction products between an aliphatic polyalcohol and a halohydrin, reaction products between an aromatic polyalcohol and a halohydrin, and reaction products between a novolac phenolic resin or a novolac resorcinol resin and a halohydrin.

4. The pneumatic agricultural or industrial tire of at least one of the previous claims wherein said polyepoxide being disposed on the surface of the polyester cord comprising the twisted yarns is derived from an ortho-cresol formaldehyde novolac resin.

5. The pneumatic agricultural or industrial tire of at least one of the previous claims, wherein said polyepoxide being disposed on the surface of the polyester cord comprising the twisted yarns is present on said polyester cord in a range of from 0.3 to 0.7 percent by weight.

6. The pneumatic agricultural or industrial tire of at least one of the previous claims, wherein said blocked isocyanate is a reaction products between one or more isocyanates and one or more blocking agents, wherein the isocyanates are selected from the group consisting of monoisocyanates, diisocyanates and triisocyanates; and wherein the blocking agents are selected from the group consisting of phenols, tertiary alcohols, aromatic amines, ethyleneimines, imides, lactams, ureas, oximes, and α-pyrolidone.

7. The pneumatic agricultural or industrial tire of at least one of the previous claims, wherein said polyepoxide being disposed on the surface of the polyester cord comprising the twisted yarns is present on said polyester cord in a range of from 0.4 to 0.6 percent by weight.

8. The pneumatic agricultural or industrial tire of claim 1, wherein said at least one component is selected from carcass plies, belts, and bead inserts.

## Patentansprüche

1. Landwirtschafts- oder Nutzfahrzeug-Luftreifen, der einen Mantel, wovon mindestens eine Komponente mit Polyesterkord verstärkt ist, und eine radial auswärts von dem Mantel angeordnete Kautschuklauffläche umfasst, wobei die Lauffläche eine innere Lauffläche (34) und eine Vielzahl von Profilstollen (50), die radial von der inneren Lauffläche (34) vorragen, aufweist, wobei der Polyesterkord eine Vielzahl miteinander verdrillter Polyestergarne umfasst, wobei die Polyestergarne ein an der Oberfläche der unverdrillten Garne angeordnetes Polyepoxid umfassen; wobei der Polyesterkord ein an der Oberfläche des die verdrillten Garne umfassenden Kords angeordnetes Polyepoxid umfasst; und wobei eine RFL-Emulsion, die ein Resorcinol-Formaldehydharz, ein Styrol-Butadien-Copolymerlatex, ein Vinylpyridin-Styrol-Butadien-Terpolymerlatex und ein blockiertes Isocyanat umfasst, über dem Polyepoxid angeordnet ist, das auf der Oberfläche des die verdrillten Garne umfassenden Kords angeordnet ist.

2. Landwirtschafts- oder Nutzfahrzeug-Luftreifen nach Anspruch 1, wobei jeder Stollen (50) eine Breite und Länge in einem Bereich von 2,032 cm bis 6,985 cm (0,8 bis 2,75 Zoll) und eine Höhe in einem Bereich von 2,54 cm bis 10,16 cm (1 bis 4 Zoll) hat, und wobei die Lauffläche ein Netto-Brutto-Verhältnis in einem Bereich von 15 bis 40 Prozent, bevorzugt 15 bis 30 Prozent, hat, gemessen um den gesamten 360°-Umfang eines normal befüllten und normal belasteten Reifens (20), der mit einer flachen harten Oberfläche in Kontakt ist.

3. Landwirtschafts- oder Nutzfahrzeug-Luftreifen nach Anspruch 1 oder 2, wobei das an der Oberfläche des Polyesterkords, das die verdrillten Garne umfasst, angeordnete Polyepoxid aus der aus Reaktionsprodukten zwischen einem aliphatischen Polyalkohol und einem Halohydrin, Reaktionsprodukten zwischen einem aromatischen Polyalkohol und einem Halohydrin, und Reaktionsprodukten zwischen einem Novolak-Phenolharz oder einem Novolak-Resorcinolharz und einem Halohydrin bestehenden Gruppe ausgewählt ist.

4. Landwirtschafts- oder Nutzfahrzeug-Luftreifen nach mindestens einem der vorangehenden Ansprüche, wobei das auf der Oberfläche des Polyesterkords, das die verdrillten Garne umfasst, angeordnete Polyepoxid von einem Orthocresol-Formaldehyd-Novolakharz abgeleitet ist.

5. Landwirtschafts- oder Nutzfahrzeug-Luftreifen nach mindestens einem der vorangehenden Ansprüche, wobei das auf der Oberfläche des Polyesterkords, das die verdrillten Garne umfasst, angeordnete Polyepoxid auf dem Polyesterkord in einem Bereich von 0,3 bis 0,7 Gewichtsprozent vorhanden ist.

6. Landwirtschafts- oder Nutzfahrzeug-Luftreifen nach mindestens einem der vorangehenden Ansprüche, wobei das blockierte Isocyanat ein Reaktionsprodukt zwischen einem oder mehreren Isocyanaten und einem oder mehreren Blockiermitteln ist, wobei die Isocyanate aus der aus Monoisocyanaten, Diisocyanaten und Triisocyanaten bestehenden Gruppe ausgewählt sind; und wobei die Blockiermittel aus der aus Phenolen, tertiären Alkoholen, aromatischen Aminen, Ethyleniminen, Imiden, Lactamen, Carbamiden, Oximen und α-Pyrolidon bestehenden Gruppe ausgewählt sind.

7. Landwirtschafts- oder Nutzfahrzeug-Luftreifen nach mindestens einem der vorangehenden Ansprüche, wobei das auf der Oberfläche des Polyesterkords, das die verdrillten Garne umfasst, angeordnete Polyepoxid auf dem Polyesterkord in einem Bereich von 0,4 bis 0,6 Gewichtsprozent vorhanden ist.

8. Landwirtschafts- oder Nutzfahrzeug-Luftreifen nach Anspruch 1, wobei die mindestens eine Komponente aus Karkassenlagen, Gürteln und Wulsteinsätzen ausgewählt ist.

## Revendications

1. Bande pneumatique agricole ou bandage pneumatique industriel comprenant une carcasse possédant au moins un composant renforcé avec un câblé en polyester, et une bande de roulement en caoutchouc disposée en direction radiale à l'extérieur de la carcasse, la bande de roulement possédant une bande de roulement interne (34) et plusieurs barrettes de bande de roulement (50) faisant saillie en direction radiale par rapport à la bande de roulement interne (34), le câblé en polyester comprenant plusieurs fils de polyester torsadés les uns aux autres, lesdits fils de polyester comprenant un polyépoxyde disposé à la surface des fils non torsadés, le câblé en polyester comprenant un polyépoxyde disposé à la surface du câblé comprenant les fils torsadés, et dans lequel une émulsion RFL comprenant une résine de résorcinol-formaldéhyde, un latex de copolymère de styrène-butadiène, un latex de terpolymère de vinylpyridine-styrène-butadiène et un isocyanate bloqué, est disposée par-dessus ledit polyépoxyde disposé à la surface du câblé comprenant les fils torsadés.

2. Bandage pneumatique agricole ou bandage pneumatique industriel selon la revendication 1, dans lequel chaque barrette (50) possède une largeur et une longueur dans la plage de 2,032 cm à 6,985 cm (de 0,8 à 2,75 pouces) et une hauteur dans la plage de 2,54 cm à 10,16 cm (de 1 à 4 pouces), la bande de roulement possédant un rapport net/brut dans la plage de 15 à 40 %, de préférence de 15 à 30 %, comme mesuré autour de la circonférence totale de 360° d'un bandage pneumatique (20) normalement gonflé et normalement chargé en contact avec une surface plate et dure.

3. Bandage pneumatique agricole ou bandage pneumatique industriel selon la revendication 1 ou 2, dans lequel ledit polyépoxyde disposé à la surface du câblé en polyester comprenant les fils torsadés, est choisi parmi le groupe constitué par des produits réactionnels d'un polyalcool aliphatique et d'une halogénhydrine, des produits réactionnels d'un polyalcool aromatique et d'une halogénhydrine, et des produits réactionnels d'une résine phénolique novolaque ou d'une résine de résorcinol novolaque et d'une halogénhydrine.

4. Bandage pneumatique agricole ou bandage pneumatique industriel selon au moins une des revendications précédentes, dans lequel ledit polyépoxyde disposé à la surface du câblé en polyester comprenant les fils torsadés dérive d'une résine novolaque d'ortho-crésol formaldéhyde.

5. Bandage pneumatique agricole ou bandage pneumatique industriel selon au moins une des revendications précédentes, dans lequel ledit polyépoxyde disposé à la surface du câblé en polyester comprenant les fils torsadés est présent sur ledit câblé en polyester dans la plage de 0,3 à 0,7 % en poids.

6. Bandage pneumatique agricole ou bandage pneumatique industriel selon au moins une des revendications précédentes, dans lequel ledit isocyanate bloqué représente un produit réactionnel d'un ou de plusieurs isocyanates et d'un ou de plusieurs agents de blocage, les isocyanates étant choisis parmi le groupe constitué par des monoisocyanates, des diisocyanates et des triisocyanates, et dans lequel les agents de blocage ne sont choisis parmi le groupe constitué par des phénols, des alcools tertiaires, des amines aromatiques, des éthylènimines, des imides, des lactames, des urées, des oximes et une α-pyrrolidone.

7. Bandage pneumatique agricole ou bandage pneumatique industriel selon au moins une des revendications précédentes, dans lequel ledit polyépoxyde disposé à la surface du câblé en polyester comprenant les fils torsadés est présent sur ledit câblé en polyester dans la plage de 0,4 à 0,6 % en poids.

8. Bandage pneumatique agricole ou bandage pneumatique industriel selon la revendication 1, dans lequel ledit au moins un composant est choisi parmi le groupe comprenant des nappes de carcasse, des ceintures et des pièces rapportées de talons.
